# EUROPEAN PATENT APPLICATION

(11) **EP 2 322 961 A1**
(43) Date of publication of application: **18.05.2011**
(21) Application number: 10187094.7
(22) Date of filing: 11.10.2010
(51) Int. Cl.: G02B 6/00, G02F 1/1335

(54) **Backlight Unit and Display Apparatus Having the Same**

(30) Priority: 17.11.2009 KR 20090110907
(71) Applicant: Samsung Electronics Co., Ltd., Gyeonggi-do 442-742 (KR)
(72) Inventor: Pankaj, Agarwal, Gyeonggi-do (KR); Chen, Hanfeng, Gyeonggi-do (KR); Sung, Jun-ho, Seoul (KR); Ha, Tae-hyeun, Gyeonggi-do (KR); Lee, Sang-hoon, Gyeonggi-do (KR); Choi, Sung-jin, Gyeonggi-do (KR)
(74) Representative: Robinson, Ian Michael

(57) **Abstract**

Disclosed are a backlight unit and a display apparatus. The display apparatus including: an image receiver receiving an image signal; an image processor processing an image signal received by the image receiver; a display panel displaying an image signal processed by the image processor into an image; a plurality of light guide plates disposed corresponding to divided display regions of the display panel respectively and providing light to the display regions respectively; and a light source module selectively disposed between adjacent light guide plates and radiating light to a lateral side of the light guide plates, if the light source module is not disposed between a first light guide plate and a second light guide plate which are adjacent each other among the plurality of light guide plates, light being radiated to the first light guide plate and the second light guide plate in opposite directions.

## Description

### BACKGROUND

### 1. Field

Apparatuses consistent with the exemplary embodiments relate to a backlight unit which provides light for image display and a display apparatus having the same, and more particularly to a backlight unit which controls variations in brightness over a display region and a display apparatus having the same.

### 2. Description of the Related Art

A display apparatus, such as a television (TV) or a monitor, has a display panel to display images, thereby presenting broadcasting signals or image data in various formats. A display panel may be realized by various forms, e.g., a liquid crystal display panel and a plasma display panel. In the case of a liquid crystal display panel, which does not generate light by itself, a display apparatus includes a backlight unit to provide light to the panel.

A backlight unit in a display apparatus is a light source which generates light. A backlight unit may utilize light emitting diodes (LEDs)which are excellent in view of environmental issues, response speed, etc., as compared with a cold cathode fluorescent lamp (CCFL). A backlight unit is classified into a direct type and an edge type depending on a position of a light source.

In a direct-type backlight unit, light sources are disposed parallel to the rear side of a light guide plate, so that each light source emits light directly to a panel in front. In an edge-type backlight unit, light sources are disposed in a bar along the edge of a light guide plate, and light from the light sources enters a lateral side of the light guide plate to be projected to a panel. An edge-type backlight unit facilitates the slimness of a display apparatus as compared with a direct-type backlight unit in that light sources are disposed on the edge of a light guide plate.

### SUMMARY

According to the present invention there is provided a backlight unit and a display apparatus as set forth in the appended claims. Other features of the invention will be apparent from the dependent claims, and the description which follows.

Exemplary embodiments provide a backlight unit which controls variations in brightness over a display region and a display apparatus having the same.

According to an aspect of an exemplary embodiment, there is provided a display apparatus including: a display panel which displays an image; a plurality of light guide plates which are disposed corresponding to a plurality of display regions of the display panel respectively and provide light to the display regions respectively; and a plurality of light source modules which radiate light, wherein a first light source module of the plurality of the light source modules is disposed between first and second light guide plates that are adjacent to each other among the plurality of light guide plates and radiates light to a lateral side of each of the first and second light guide plates, wherein none of the light source modules are disposed between the second light guide plate and a third light guide plate which are adjacent to each other among the plurality of light guide plates, and light is radiated to the second light guide plate in a direction that is opposite to a direction in which light is radiated to the third light guide plate.

The light source module may include a plurality of light sources aligned with one another along a lateral side of at least one of the light guide plates.

The light sources in one light source module may radiate light in the same direction relative to one another.

The light sources may include a light emitting diode.

A second light source module of the plurality of the light source modules is disposed between the third light guide plate and a fourth light guide plate which are adjacent each other among the light guide plates, and the second light source module may radiate light to the third light guide plate and the fourth light guide plate.

The light guide plates may be disposed parallel to the display regions of the display panel and in parallel to at least one direction of a column direction and a row direction.

According to an aspect of another exemplary embodiment, there is provided a backlight unit providing light to a display panel, the backlight unit including: a plurality of light guide plates which are disposed corresponding to a plurality of display regions of the display panel respectively and provide light to the display regions respectively; and a plurality of light source modules which radiate light, wherein a first light source module of the plurality of the light source modules is disposed between first and second light guide plates which are adjacent to each other among the plurality of light guide plates and radiate light to a lateral side of each of the first and second light guide plates, wherein none of the plurality of the light source modules are disposed between the second light guide plate and a third light guide plate which are adjacent to each other among the plurality of light guide plates, and light is radiated to the second light guide plate in a direction that is opposite to a direction in which light is irradiated to the third light guide plate.

The light source module may include a plurality of light sources aligned with one another along a lateral side of at least one of the plurality of the light guide plates.

The light sources in one light source module may radiate light in the same direction relative to one another.

The light sources may include a light emitting diode.

A second light source module of the plurality of the light source modules is disposed between the third light guide plate and a fourth light guide plate which are adjacent each other among the plurality of the light guide plates, and the second light source module may radiate light to the third light guide plate and the fourth light guide plate.

The light guide plates may be disposed parallel to the display regions of the display panel and parallel to at least one direction of a column direction and a row direction.

According to an aspect of another exemplary embodiment, there is provided a display apparatus including: a display panel which displays an image; a plurality of light guide plates which are disposed corresponding to a plurality of display regions of the display panel respectively and provide light to the display regions respectively; and a plurality of light source modules which radiate light to lateral sides of the plurality of light guide plates, the plurality of light source modules including a first light source module radiating light in a first direction and a second light source module radiating light in a second direction opposite to the first direction, wherein each of the plurality of light source modules is disposed between adjacent pairs of light guide plates which are adjacent each other among the plurality of light guide plates, and none of the plurality of light source modules is disposed between adjacent light guides plates of each of the pairs of light guide plates.

The display apparatus may include one of the light source module disposed on a lateral side of an outermost light guide plate among the light guide plates that radiates light in a direction toward the light guide plates.

The light guide plates may be disposed parallel to the display regions of the display panel and parallel to at least one direction of a column direction and a row direction.

The first and second light source groups may include a light emitting diode.

A plurality of light emitting diodes in the first light source module may be disposed straightly in a row and the plurality of light emitting diodes in the second light source module may be disposed straightly in a row.

Each of the light emitting diodes in the first light source module is aligned with a corresponding one of the light emitting diodes of the second light source module.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is an exploded perspective view of a display apparatus according to an exemplary embodiment;

FIG. 2 is a perspective view illustrating a main part of the arrangement of a light guide plate and a light source module in the display apparatus of FIG. 1;

FIG. 3 is a plane view illustrating the arrangement of the light guide plate and the light source module of FIG. 2;

FIG. 4 is a plane view illustrating the arrangement of the light guide plate and a light source in the display apparatus of FIG. 1 and a graph illustrating brightness distribution accordingly; and

FIG. 5 is a block diagram of the display apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary skill in the art. The concept may be embodied in various forms without being limited to the exemplary embodiments set forth herein. Descriptions of well-known parts are omitted for clarity, and like reference numerals refer to like elements throughout.

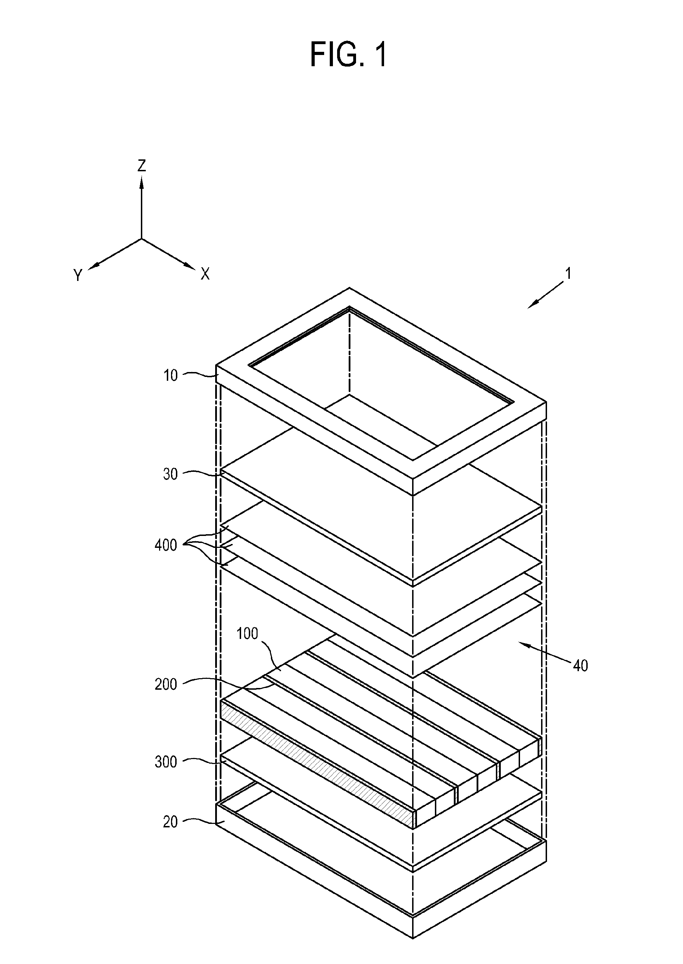

FIG. 1 is a schematic exploded perspective view of a display apparatus 1 according to one exemplary embodiment.

As shown in FIG. 1, the display apparatus 1 according to an exemplary embodiment includes covers 10 and 20 forming an accommodation space therebetween, a display panel 30 accommodated in the accommodation space by the covers 10 and 20 and on which an image is displayed, and a backlight unit 40 accommodated in the accommodation space and providing light to the display panel 30 to display an image on the display panel 30.

Throughout this description of the exemplary embodiments and in the figures, X, Y, and Z directions indicate the width, length, and height directions, respectively. The opposite directions of the X, Y, and Z directions are expressed as -X, -Y, and -Z directions, respectively, and the XY-plane refers to a plane defined by the X-axis and the Y-axis. The display panel 30 is disposed on the XY-plane, and the backlight unit 30 and the display panel 30 are layered in the Z direction.

The covers 10 and 20 form the outward appearance of the display apparatus 1 and accommodate the display panel 30 and the backlight unit 40. The covers 10 and 20 include an upper cover 10 and a lower cover 20 which cover the upper side of the display panel 30 and the lower side of the backlight unit 40, respectively. The upper cover 10 and the lower cover 20 form the accommodation space together, and the display panel 30 and the backlight unit 40 are accommodated in the accommodation space. The upper cover 10 is formed with an opening on one side to expose a display region of the display panel 30.

In the present exemplary embodiment, the display panel 30 is a liquid crystal panel. The display panel 30 is formed of two substrates (not shown) and a liquid crystal layer (not shown) interposed therebetween and displays images by adjusting the alignment of the liquid crystal layer (not shown) via the application of driving signals. The display panel 30 does not emit light by itself and is provided with light from the backlight unit 40 to display images on the display region. Here, the display region is an area of the display panel 30 which is parallel to the XY-plane and on which images are displayed.

The display panel 30 includes a driving circuit board (not shown) and when a driving signal is applied from the driving circuit board, liquid crystals (not shown) in the display panel 30 rotate at a predetermined angle. Accordingly, light transmission characteristics vary in each cell (not shown) forming the display region of the display panel 30, so that images can be displayed in the display region.

The backlight unit 40 is disposed at a rear of the display panel 30 to provide light to the display panel 30. The backlight unit 40 includes a plurality of light guide plates 100 through which light is transmitted to the display region of the display panel 30, a plurality of light source modules 200 generating light to enter the plurality of light guide plates 100, a reflective sheet 300 disposed at a rear of the light guide plates 100 and reflecting light to the display panel 30, and optical sheets 400 adjusting characteristics of light which exits from the light guide plates 300.

The light guide plates 100 transmit light from the light source modules 200 uniformly to the entire display region of the display panel 30. The light guide plates may be, for example, a plastic lens formed by acrylic injection molding. In the present exemplary embodiment, the light guide plates 100 have a rectangular shape extending in the X direction and are arrayed in the Y direction, but their number, shape, extending direction, and arrangement do not limit the scope of the present exemplary embodiments.

The light guide plates 100 may have a light transmission pattern on a lower side thereof facing the reflective sheet 300, thereby improving the uniformity of light exiting from the light guide plates 100 and adjusting the amount of exiting light. The amount of light exiting from each of the light guide plates 100 may be different depending on how the light transmission pattern is formed.

The light source modules 200 emit light to be provided to the display panel 30 and are disposed on a lateral side of each light guide plate 100 so that generated light enters each light guide plate 100. Namely, the light source modules 200 extend in the X direction similar to the light guide plates 100, and the light guide plates 100 and the light source modules 200 are alternately disposed in the Y direction.

Light emitted from the light source modules 200 enters the light guide plates 100 in a direction parallel to the XY-plane, and then exits from the light guide plates 100 in the Z direction to enter the display panel 30. Accordingly, the display panel 30 forms images in the display region parallel to the XY-plane.

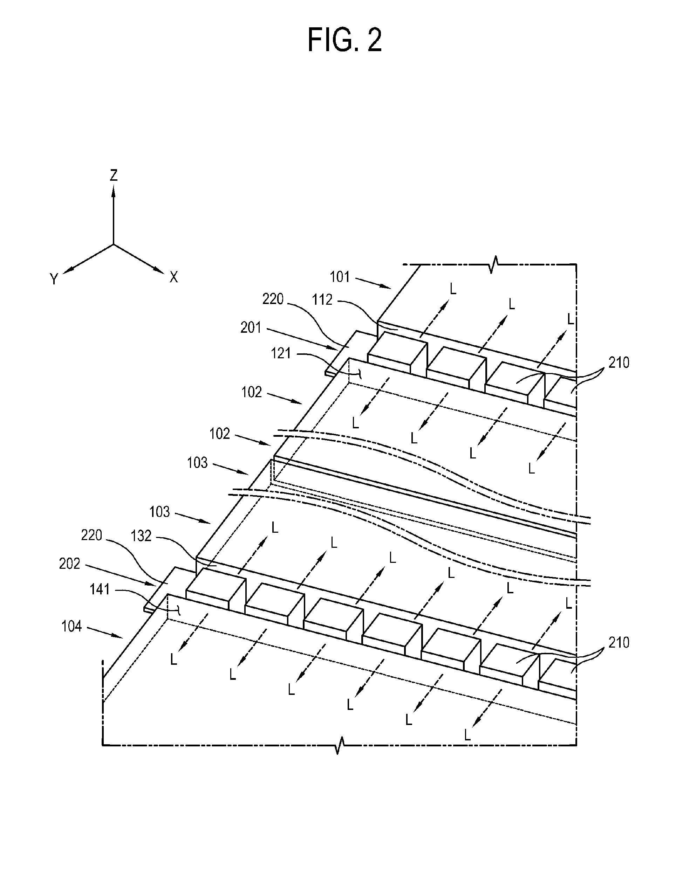

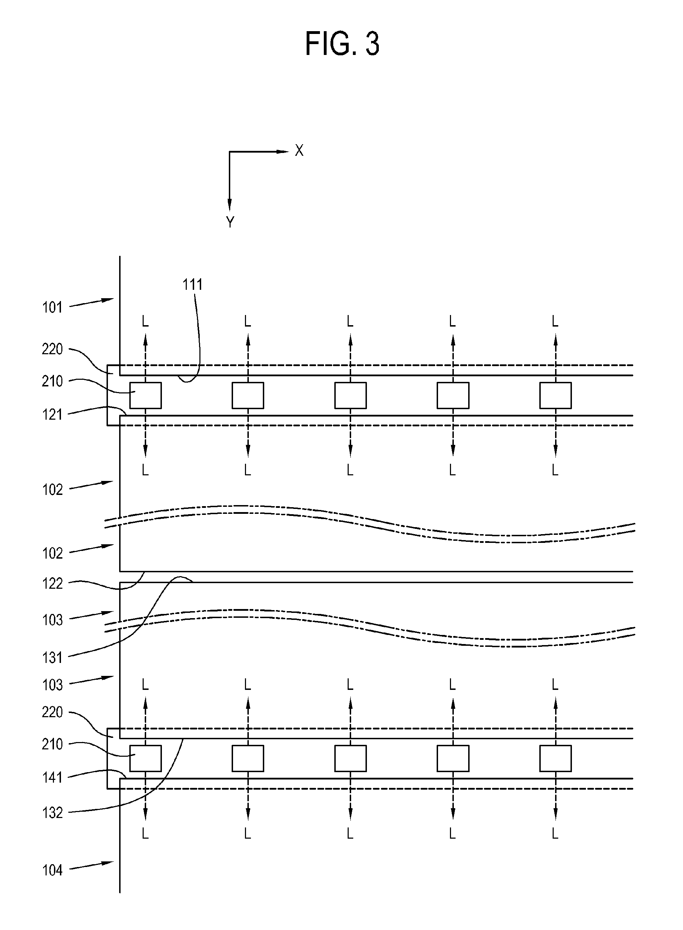

Hereinafter, the arrangement of light guide plates 101, 102, 103, and 104 and light source modules 201 and 202 according to the present exemplary embodiment will be explained with reference to FIGS. 2 and 3. FIG. 2 is a perspective view illustrating an -X-direction edge portion of the light guide plates 101, 102, 103 and 104 and the light source modules 201 and 202 arranged in the display apparatus 1 of FIG. 1; and FIG. 3 is a plane view of FIG. 2.

As shown in FIGS. 2 and 3, a plurality of light guide plates 101, 102, 103 and 104 are disposed in the Y direction on the XY-plane. Hereinafter, according to a Y-direction position, the light guide plates 101, 102, 103 and 104 are referred to as a first light guide plate 101, a second light guide plate 102, a third light guide plate 103, and a fourth guide plate 104, respectively. That is, the first light guide plate 101 is adjacent to the second light guide plate 102, the second light guide plate 102 is adjacent to the third light guide plate 103, and the third light guide plate 103 is adjacent to the fourth light guide plate 104.

Further, a first lateral side 112 of the first light guide plate 101 faces a second lateral side 121 of the second light guide plate 102, a first lateral side 122 of the second light guide plate 102 faces a second lateral side 131 of the third light guide plate 103, and a first lateral side 132 of the third light guide plate 103 faces a second lateral side 141 of the fourth light guide plate 104. Such names are given only for convenience to illustrate the embodiment, but do not limit the scope of the present display apparatus or backlight unit.

The light source modules 201 and 202 are selectively disposed between two adjacent ones of the light guide plates 101, 102, 103 and 104. In FIGS. 2 and 3, a first light source module 201 is disposed between the first light guide plate 101 and the second light guide plate 102, and a second light source module 202 is disposed between the third light guide plate 103 and the fourth light guide plate 104. However, no light source module is disposed between the second light guide plate 102 and the third light guide plate 103.

Namely, the first light source module 201 is disposed between the first lateral side 112 of the first light guide plate 101 and the second lateral side 121 of the second light guide plate 102, and the second light source module 202 is disposed between the first lateral side 132 of the third light guide plate 103 and the second lateral side 141 of the fourth light guide plate 104. However, the light source modules 201 and 202 are not disposed between the first lateral side 122 of the second light guide plate 102 and the second lateral side 131 of the third light guide plate 131.

The light source modules 201 and 202 generate light (L) and each include a plurality of light sources 210 aligned with one another along the X direction and a module board 220 on which the light sources 210 are mounted.

In the present exemplary embodiment, each of the light sources 210 is a light emitting diode (LED) and receives driving power and an on/off control signal from the module board 220. Here, light sources 210 in each of the light source modules 201 and 202 irradiate light in the same directions.

The light sources 210 mounted in one module board 220 include blue LEDs, green LEDS, and red LEDs, and blue light, green light and red light from the respective LEDs are mixed into white light with excellent color reproducibility. However, this is only an illustrative example, and the light sources 210 may include a white LED which generates white light.

The light sources 210 radiate light (L) both in the Y direction and in the -Y direction. That is, light (L) generated from the light sources 210 in the first light source module 201 enters the first lateral side 112 of the first light guide plate 101 and the second lateral side 121 of the second light guide plate 102, and light (L) generated from the light sources 210 in the second light source module 202 enters the first lateral side 132 of the third light guide plate 103 and the second lateral side 141 of the fourth light guide plate 104. Thus, since light (L) generated from each of the light source modules 201 and 202 is radiated to light guide plates 100 disposed on both sides, the number of the light guide modules 201 and 202 may be reduced.

In the present exemplary embodiment, the light source modules 201 and 202 are not disposed between two adjacent light guide plates 102 and 103 of the plurality of light guide plates 101, 102, 103 and 104, and light is radiated to the respective light guide plates 102 and 103 in opposite directions.

In the exemplary embodiment, as the light source modules 201 and 202 are not provided between the second light guide plate 102 and the third light guide plate 103, light (L) from the first light source module 201 to the second light guide plate 102 is radiated in an opposite direction relative to light (L) radiated from the second light source module 202 to the third light guide plate 103. Accordingly, overall brightness variations in the display region are decreased.

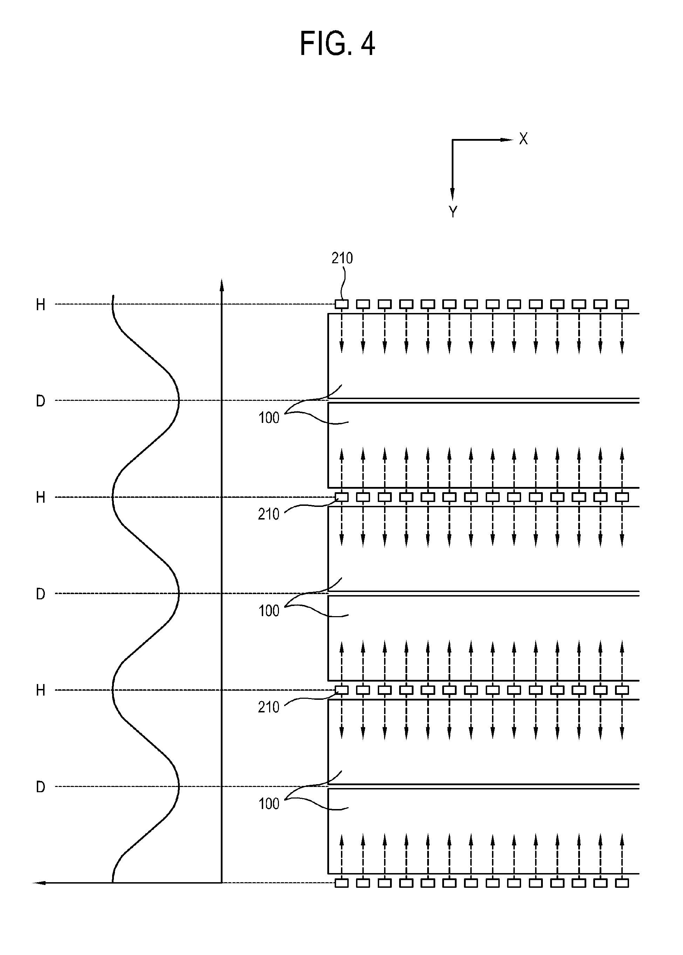

Hereinafter, a configuration where the light guide plates 100 and the light source modules 200 are disposed as in the foregoing exemplary embodiment is explained in detail with reference to FIG. 4. FIG. 4 is a plane view illustrating a plurality of light guide plates 100 and corresponding light sources arranged according to one exemplary embodiment and a graph illustrating brightness distribution according to the arrangement.

As shown in FIG. 4, a plurality of light guide plates 100 are aligned with one another along the Y direction, and a row of light sources 210 is disposed along the X direction and between every other two adjacent light guide plates 100, wherein one row of light sources and two of the light guide plates alternate along the Y direction. In FIG. 4, line H defines a row of light sources 210 between two light guide plates 100, and line D defines an extending line between two light guide plates 100 where light sources 210 are not disposed. Lines H and D are parallel to the X direction.

Light sources 210 corresponding to the outermost light guide plates 100 in the Y and -Y directions are not disposed between two light guide plates 100, and thus they emit light to a single neighboring light guide plate 100. Light sources 210 disposed between two light guide plates 100 emit light in opposite directions to both light guide plates 100.

In FIG. 4, the left graph illustrates brightness distribution in each display region. An axis parallel with the Y direction corresponds to the position along the display apparatus in the Y direction, and an axis parallel with the X direction represents brightness.

According to the present exemplary embodiment, when light sources 210 are not disposed between two adjacent light guide plates 100, the light sources 210 radiate light respectively to the two adjacent light guide plates 100 in opposite directions. In other words, lines H and lines D are alternately disposed in the Y direction, and the light sources 210 radiate light in a direction from line H to line D.

Accordingly, brightness is the highest in line H where the light sources 210 are disposed, decreases toward line D, and is the lowest in line D.

In a related art configuration in which light sources 210 are disposed in every area between light guide plates 100 and all the light sources 210 radiate light in the Y direction, light from the light sources 210 overlaps toward the Y direction, so that brightness is the lowest in the upper edge of a display region and the highest in the lower edge of the display region. In the related art configuration, non-uniformity and variations in brightness are considerable in the overall display region.

In the present exemplary embodiment, however, since the highest and lowest levels in brightness alternately occur in the Y direction, brightness distribution is uniform overall in the display region and brightness variations decrease as compared with the related art configuration.

In the present exemplary embodiment, the light sources 210 are selectively disposed between neighboring light guide plates 100, and when light sources 210 are not disposed between two adjacent light guide plates 100, light is radiated to the two adjacent light guide plates 100 in opposite directions. Accordingly, brightness distribution is uniform overall in the display region and brightness variations decrease, thereby improving image quality.

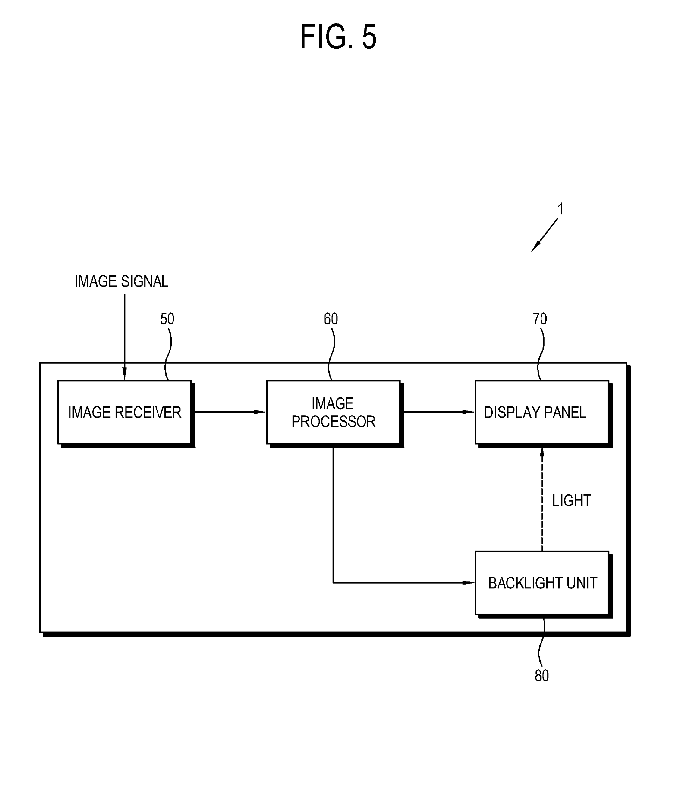

FIG. 5 is a block diagram of a display apparatus 1 according to one exemplary embodiment. In FIG. 5, a solid line indicates transmission of an image or control signal, and a dotted line indicates transmission of light.

As shown in FIG. 5, the display apparatus 1 according to the exemplary embodiment includes an image receiver 50 which receives an image signal, an image processor 60 which processes an image signal received by the image receiver 50, a display panel 70 which displays an image signal processed by the image processor 60 into an image, and a backlight unit 80 which provides light so that an image is displayed on the display panel 70.

The image receiver 50 may have various standards. For example, when the display apparatus 1 is a TV, the image receiver 50 receives a radio frequency (RF) signal transmitted from a broadcasting station (not shown) by image signals in composite video, component video, super video, SCART, and high definition multimedia interface (HDMI) standards. Alternatively, when the display apparatus 1 is a computer monitor, the image receiver 50 may be D-SUB to transmit RGB signals according to the video graphics array (VGA) format or receive image signals in digital video interactive (DVI) and HDMI standards.

The image processor 60 carries out various preset processes for image processing on image signals transmitted from the image receiver 50. As a non-limiting example, the image processor 60 may conduct decoding and encoding corresponding to various image formats, de-interlacing, frame refresh rate conversion, scaling, noise reduction to improve image quality, and detail enhancement.

The image processor 60 is provided as a separate component to independently conduct each process or an integrated component which is multi-functional.

The display panel 70 and the backlight unit 80 are substantially the same in configuration as those of the foregoing exemplary embodiment, and their description is omitted.

Although a few preferred embodiments have been shown and described, it will be appreciated by those skilled in the art that various changes and modifications might be made without departing from the scope of the invention, as defined in the appended claims.

## Claims

1. A display apparatus comprising:
an image receiver receiving an image signal;
an image processor processing an image signal received by the image receiver;
a display panel which displays an image;
a plurality of light guide plates which are disposed corresponding to a plurality of display regions of the display panel respectively and provide light to the display regions respectively; and
a plurality of light source modules which radiate light, wherein a first light source module of the plurality of light source modules is disposed between first and second light guide plates which are adjacent to each other among the plurality of light guide plates and radiates light to a lateral side of each of the first and second light guide plates,
wherein none of the plurality of the light source modules are disposed between the second light guide plate and a third light guide plate which are adjacent to each other among the plurality of light guide plates, and light is radiated to the second light guide plate in a direction that is opposite to a direction in which light is radiated to the third light guide plate.

2. The display apparatus according to claim 1, wherein each of the light source modules comprises a plurality of light sources aligned with one another along a lateral side of at least one of the plurality of the light guide plates.

3. The display apparatus according to claim 2, wherein each of the plurality of the light sources in one light source module among the plurality of light source modules radiates light in the same direction relative to one another.

4. The display apparatus according to claim 2, wherein the light sources comprise a light emitting diode.

5. The display apparatus according to claim 1, wherein a second light source module of the plurality of the light source modules is disposed between the third light guide plate and a fourth light guide plate which are adjacent to each other among the plurality of the light guide plates, and the second light source module radiates light to the third light guide plate and the fourth light guide plate.

6. The display apparatus according to claim 1, wherein each of the plurality of the light guide plates is disposed parallel to the display regions of the display panel and parallel to at least one direction of a column direction and a row direction.

7. A backlight unit providing light to a display panel comprising:
a plurality of light guide plates which are disposed corresponding to a plurality of display regions of the display panel respectively and provide light to the display regions respectively; and
a plurality of light source modules which radiate light, wherein a first light source module of the plurality of the light source modules is disposed between first and second light guide plates which are adjacent to each other among the plurality of the light guide plates and radiates light to a lateral side of each of the first and second light guide plates,
wherein none of the plurality of the light source modules are disposed between the second light guide plate and a third light guide plate which are adjacent to each other among the plurality of light guide plates, and light is radiated to the second light guide plate in a direction that is opposite to a direction in which light is radiated to the third light guide plate.

8. The backlight unit according to claim 7, wherein each of the light source module comprises a plurality of light sources aligned with one another along a lateral side of at least one of the plurality of the light guide plates.

9. The backlight unit according to claim 8, wherein each of the plurality of the light sources in one light source module among the plurality of light source modules radiates light in the same direction relative to one another.

10. The backlight unit according to claim 8, wherein the light sources comprise a light emitting diode.

11. The backlight unit according to claim 7, wherein a second light source module of the plurality of the light source modules is disposed between the third light guide plate and a fourth light guide plate which are adjacent to each other among the plurality of the light guide plates, and the second light source module radiates light to the third light guide plate and the fourth light guide plate.

12. The backlight unit according to claim 7, wherein each of the plurality of the light guide plates is disposed parallel to the display regions of the display panel and parallel to at least one direction of a column direction and a row direction.
